# EUROPÄISCHE PATENTSCHRIFT

(11) **EP 2 413 757 B1**
(45) Veröffentlichungstag und Bekanntmachung des Hinweises auf die Patenterteilung: **26.02.2014**
(21) Anmeldenummer: 10721294.6
(22) Anmeldetag: 06.04.2010
(51) Int. Cl.: A47J 43/10, A47J 43/24, A47L 13/58

(54) **SPINDELANTRIEBSVORRICHTUNG**
SPINDLE DRIVE DEVICE
DISPOSITIF D'ENTRAÎNEMENT À BROCHE

(30) Priorität: 03.04.2009 DE 102009016204
(43) Veröffentlichungstag der Anmeldung: 08.02.2012
(73) Patentinhaber: Leifheit AG, 56377 Nassau (DE)
(72) Erfinder: BRAND, Dieter, 56132 Dausenau (DE)
(74) Vertreter: Bungartz, Klaus Peter
(86) Internationale Anmeldenummer: PCT/DE2010/075032
(87) Internationale Veröffentlichungsnummer: WO 2010/112026

(56) Entgegenhaltungen:
- WO-A1-2006/114251
- WO-A1-2009/083141
- CN-Y- 201 325 024
- DE-A1- 3 118 741
- FR-A- 617 135
- US-A- 3 789 896

## Beschreibung

Die Erfindung betrifft eine Spindelantriebsvorrichtung zum Antreiben einer Zerkleinerungsvorrichtung für Lebensmittel und/ oder einer Schleudervorrichtung.

Es ist allgemein bekannt, dass Spindelantriebsvorrichtungen zur Umwandlung von Längsbewegungen in Drehbewegungen oder umgekehrt eingesetzt werden. Die Einsatzmöglichkeiten von Spindelantriebsvorrichtungen sind dabei vielfältig. So ist es beispielsweise bekannt, dass diese in Zerkleinerungsvorrichtungen für Lebensmittel oder in Schleudervorrichtungen, insbesondere Salatschleudern oder Schleudern für Wischgeräte, eingesetzt werden.

Aus der FR 617 135 A ist ein Quirl mit zwei übereinander angeordneten Spindeln auf einer Spindelachse bekannt, die mit jeweils einer Spindelmutter beide bei der Bewegung eines Haltegriffes im Eingriff sind. Dieser Quirl kann jedoch nur eine Hubbewegung mit gleicher Übersetzung in eine Drehbewegung umsetzen. Gleiches gilt für ein aus der WO 2006/114251 A1 bekanntes Wischgerät oder die aus der US3789896 A, der DE3118741 A1 oder der CN201325024Y bekannten Drillwerkzeuge.

Aus WO2006/114252 A1 ist eine Schleudervorrichtung für ein Wischgerät bekannt, die eine Spindelantriebsvorrichtung verwendet. In dieser Schleudervorrichtung wird eine mit einem Gewinde einer Spindel in Kontakt stehende Spindelmutter relativ zur Spindel bewegt. Das Gewinde der Spindel weist eine über die gesamte Länge der Spindel gleichbleibende Gewindesteigung auf. Durch die Relativbewegung der Spindelmutter zur Spindel wird bewirkt, dass die Spindel und ein die Spindel tragender Stiel, der mit einem Wischmopp gekoppelt ist, jeweils um eine Längsachse gedreht werden.

Der Einsatz einer Spindel, die eine über die gesamte Länge der Spindel gleichbleibende kleine Gewindesteigung aufweist, besitzt den Nachteil, dass bei einem Betätigen der Spindelmutter am Anfang ein hoher Kraftaufwand notwendig ist, bzw. von der Spindel ein hohes Drehmoment abgegeben werden muss, um die Massenträgheit des zu rotierenden Gegenstands zu überwinden. Dieser Kraftaufwand hängt unter anderem von der Größe der Gewindesteigung und dem Gewicht des zu drehenden Gegenstands ab. Der benötigte Kraftaufwand ist klein, wenn das Gewinde eine große Gewindesteigung aufweist und/ oder das Gewicht des zu drehenden Körpers klein ist. Eine große Gewindesteigung weist jedoch den Nachteil auf, dass keine hohen Drehzahlen der Spindel und damit des zu rotierenden Gegenstands erreicht werden können.

Es ist die Aufgabe der vorliegenden Erfindung, eine Spindelantriebsvorrichtung bereitzustellen, die je nach Bedarf ein benötigtes Drehmoment bzw. eine benötigte Drehzahl bereitstellen kann.

Diese Aufgabe wird erfindungsgemäß durch die Merkmale des Patentanspruchs 1 oder des Patentanspruchs 2 gelöst. Vorteilhafte Ausgestaltungen der Erfindung sind in den Unteransprüchen gekennzeichnet.

Die Erfindung hat den Vorteil, dass die Spindel mindestens zwei Abschnitte mit jeweils unterschiedlichen Gewindesteigungen besitzt. Durch eine Variation der Gewindesteigung wird eine höhere Flexibilität der Spindel erzielt. So kann die Gewindesteigung in Abschnitten, in denen ein hoher Kraftaufwand benötigt wird, um beispielsweise die Massenträgheit eines zu rotierenden Gegenstands zu überwinden, größer und in Abschnitten, in denen eine hohe Drehzahl benötigt wird, kleiner ausgebildet werden.

Eine weitere vorteilhafte Ausgestaltung der Erfindung besteht darin, dass die Gewindesteigung der Spindel, in dem zu einer Betätigungseinrichtung näherliegenden Abschnitt größer ausgebildet ist als die Gewindesteigung des zu einem Koppelelement näherliegenden Abschnitts. Durch die größere Gewindesteigung des zur Betätigungseinrichtung näher liegenden Abschnitts wird sichergestellt, dass der anfänglich benötigte Kraftaufwand zum Überwinden der Massenträgheit des Gegenstands klein ist. Zusätzlich wird durch die kleinere Gewindesteigung des zu dem Koppelelement näherliegenden Abschnitts sichergestellt, dass wenn die Massenträgheit des zu rotierenden Gegenstands überwunden wurde, dieser mit einer hohen Drehzahl gedreht werden kann.

Ferner besteht eine weitere vorteilhafte Ausgestaltung der Erfindung darin, dass die Gewindesteigung der Spindel, in dem zu einer Betätigungseinrichtung näherliegenden Abschnitt kleiner ausgebildet ist als die Gewindesteigung des zu einem Koppelelement näherliegenden Abschnitts. So kann erreicht werden, dass sich der zu rotierende Gegenstand anfänglich mit einer hohen Drehzahl dreht, wenn die Dreherzeugungseinheit in Kontakt mit dem Abschnitt der Spindel steht, der eine kleine Gewindesteigung besitzt. Zusätzlich kann erreicht werden, dass die Spindelantriebsvorrichtung ein hohes Drehmoment an den zu rotierenden Gegenstand abgeben kann, wenn die Dreherzeugungseinheit in Kontakt mit dem Abschnitt der Spindel steht, der eine große Gewindesteigung besitzt.

Einzelheiten der Erfindung werden anhand der Zeichnung näher erläutert. Dabei zeigen:
Fig.1: eine Vorderansicht einer Zerkleinerungsvorrichtung,
Fig. 2: eine Schnittansicht einer Spindelantriebsvorrichtung,
Fig. 3: eine Vorderansicht einer Schleudervorrichtung für ein Wischgerät.

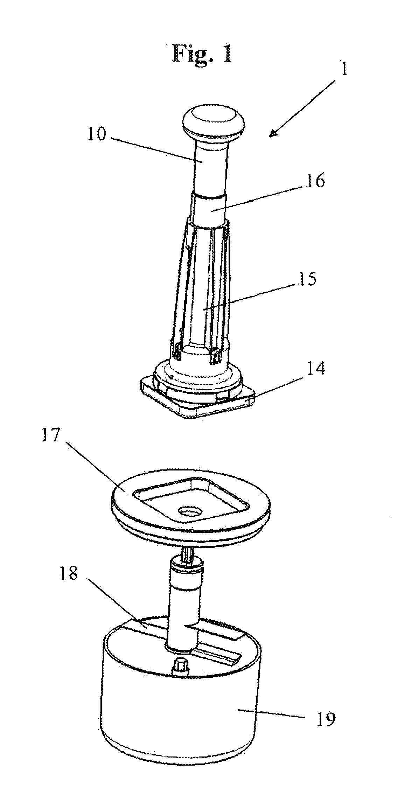

Fig.1 zeigt eine erste Ausführungsform der Erfindung. Die in Fig. 1 gezeigte Zerkleinerungsvorrichtung 1 weist eine Spindelantriebsvorrichtung und einen Behälter 19 auf. Die Spindelantriebsvorrichtung weist eine verdrehfeste Betätigungsvorrichtung 10, ein Koppelelement 14 und ein zwischen der Betätigungsvorrichtung 10 und dem Koppelelement 14 angeordnetes Gehäuse 15 auf. Die Betätigungsvorrichtung 10 weist eine Stößelform auf und ist entlang einer Längsachse 16 der Spindelantriebsvorrichtung verschiebbar. Bei einer Bewegung der Betätigungsvorrichtung 10 bewegt sich diese relativ zu dem in Längsrichtung nicht bewegbaren Gehäuse 15. Das Gehäuse 15 ist mit dem Koppelelement 14 verbunden. Das Koppelement 14 wird in eine Aussparung eines Deckels 17 eingesetzt, wobei der Deckel 17 den Behälter 19 abschließt. Innerhalb des Behälters 19 sind Zerkleinerungselemente 18 angeordnet. Diese Zerkleinerungselemente 18 sind über eine Koppelvorrichtung, die sich durch eine Öffnung des Deckels 17 erstreckt, mit der Spindelantriebsvorrichtung gekoppelt und auf einem Lagerelement aufgesetzt, das sich innerhalb des Behälters 19 befindet. Die Zerkleinerungselemente 18 werden beim Einsatz der Zerkleinerungsvorrichtung 1 dazu benutzt, um beispielsweise Lebensmittel zu zerkleinern.

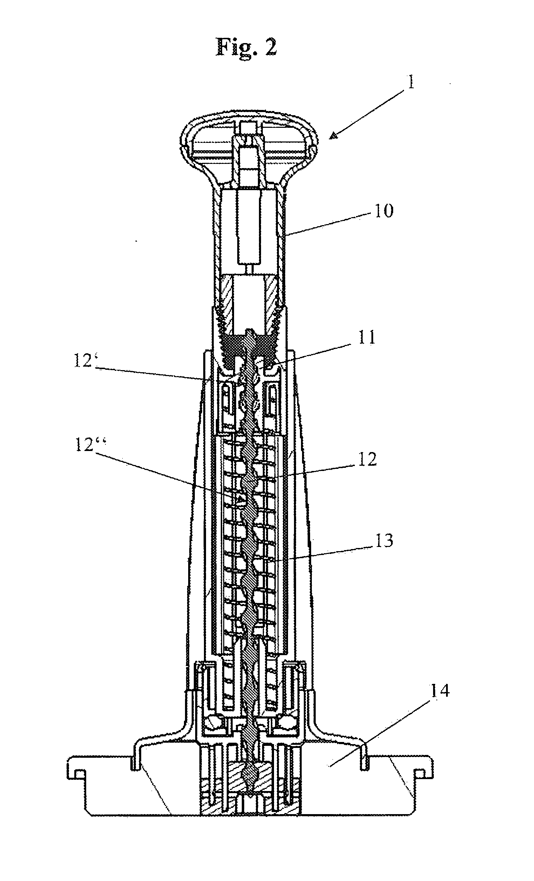

Figur 2 zeigt eine Schnittansicht der Spindelantriebsvorrichtung, bei der sich die Betätigungsvorrichtung 10 in einer maximal ausgefahrenen Position befindet. Aus Figur 2 ist erkennbar, dass die Betätigungsvorrichtung 10, das Gehäuse 15 und das Koppelelement 14 jeweils einen Hohlraum ausbilden. Die verdrehfeste Betätigungsvorrichtung 10 ist mit einer verdrehfesten Dreherzeugungseinheit 11, die als Spindelmutter 11 ausgebildet ist und im Folgenden derart bezeichnet wird, gekoppelt. Die Spindelmutter 11 ist mit einer Spindel 12 koppelbar. Genauer gesagt ist die Spindelmutter 11 mit einem Gewinde der Spindel 12 koppelbar. Als Gewinde wird in diesem Fall jede mögliche Ausführung verstanden, die eine Umwandlung einer Längsbewegung in eine Drehbewegung durch die Spindel 12 ermöglicht. D.h, dass das Gewinde z.B. nicht auf ein Schraubengewinde begrenzt sein soll.

Die Spindelantriebsvorrichtung weist innerhalb des Hohlraums des Gehäuses 15 eine Feder 13 auf, die an einem Ende mit der Spindelmutter 11 verbunden ist. An dem der Spindelmutter 11 entfernten Ende ist die Feder 13 innerhalb der Spindelantriebsvorrichtung derart angeordnet, dass sie sich bei einer Bewegung der Betätigungsvorrichtung 10 in Richtung zu dem Koppelelement 14 vorspannen kann. Zusätzlich weist die Spindelantriebsvorrichtung eine in Figur 2 nicht dargestellte Arretiervorrichtung auf. Mittels der Arretiervorrichtung kann bei einer Betätigung der Betätigungsvorrichtung 10 diese in der betätigten, zusammengedrückten Stellung arretiert werden und somit eine Bewegung der Betätigungsvorrichtung in die Ausgangsposition verhindert werden.

Die Spindel 12 erstreckt sich über die jeweiligen Hohlräume der Betätigungsvorrichtung 10, des Gehäuses 15 und des Koppeletements 14. Über eine mit der Spindel 12 gekoppelte Drehübertragungseinheit kann die Drehbewegung der Spindel 12 auf die Koppelvorrichtung der Zerkleinerungselemente 18 übertragen werden. Die Spindel 12 weist zwei Abschnitte 12', 12" mit jeweils unterschiedlichen Gewindesteigungen auf. Die Erfindung ist aber nicht nur auf zwei Abschnitte mit unterschiedlichen Gewindesteigungen begrenzt. Die Spindel kann auch je nach Anforderung bezüglich des von der Spindel 12 abzugebenden Drehmoments bzw. bezüglich der Drehzahl der Spindel mehrere Abschnitte mit unterschiedlichen und/ oder gleichen Gewindesteigungen aufweisen.

Der erste Abschnitt 12' ist an einem der Betätigungsvorrichtung 10 näherliegenden Bereich der Spindel 12 vorgesehen, während der zweite Abschnitt 12" an einem dem Koppelelement 14 näherliegenden Bereich der Spindel 12 vorgesehen ist. Die Gewindesteigung des ersten Abschnitts 12' ist größer als die Gewindesteigung des zweiten Abschnitts 12". Dadurch wird erreicht, dass beim Betreiben der Zerkleinerungsvorrichtung 1 im Falle, dass die Spindelmutter 11 mit dem ersten Abschnitt 12' gekoppelt, durch die Spindel 12 ein kleiner Kraftaufwand benötigt wird, um die Massenträgheit der Zerkleinerungselemente 18 zu überwinden. Zusätzlich wird erreicht, dass beim Betreiben der Zerkleinerungsvorrichtung 1 im Falle, dass die Spindelmutter 11 der Spindelantriebsvorrichtung mit dem zweiten Abschnitt 12" gekoppelt ist, durch die Spindel 12 hohe Drehzahlen an das an die Zerkleinerungselemente 18 übertragen werden können.

Im Folgenden wird der Betrieb der Zerkleinerungsvorrichtung 1 durch einen Benutzer beschrieben. Der Benutzer bewegt die Betätigungsvorrichtung 10 in Richtung zu dem Koppelelement 14. Infolge der Bewegung der verdrehfesten Betätigungsvorrichtung 10 bewegt sich die verdrehfeste Spindelmutter 11 ebenfalls in Richtung zum Koppelelement 14. Diese Betätigungsvorrichtung 10 dringt in den Hohlraum des Gehäuses 15 ein und kommt mit der Spindelmutter 11 in Kontakt. Alternativ ist es vorstellbar, dass die Betätigungsvorrichtung 10 bereits in der unbetätigten Position mit der Spindelmutter 11 in Kontakt steht.

Die Spindel 12 beginnt sich aufgrund des Kontakts der Spindelmutter 11 mit der Spindel 12 zu drehen. Bei einem Durchlaufen der Spindelmutter 11 durch den ersten Abschnitt 12', ist aufgrund der großen Gewindesteigung des ersten Abschnitts 12' der Spindel 12, der zum Überwinden der Massenträgheit der Zerkleinerungselemente 18 benötigte Kraftaufwand gering. Bei einem Durchlaufen der Spindelmutter 12" durch den zweiten Abschnitt 12" kann aufgrund der kleinen Gewindesteigung des zweiten Abschnitts 12" eine hohe Drehzahl auf die Zerkleinerungselemente 18 übertragen werden. Die Spindelmutter 11 wird solange in Richtung zu dem Koppelelement 14 bewegt bis die Spindelmutter 11 und/ oder die Betätigungsvorrichtung 10 gegen ein Anschlagelement stoßen. Durch die Feder 13 kann sichergestellt werden, dass die Spindelmutter 11 und die Betätigungsvorrichtung 10 wieder in die in Figur 1 gezeigte Ausgangslage verschoben werden, falls die Arretiervorrichtung nicht betätigt ist, um dies zu verhindern.

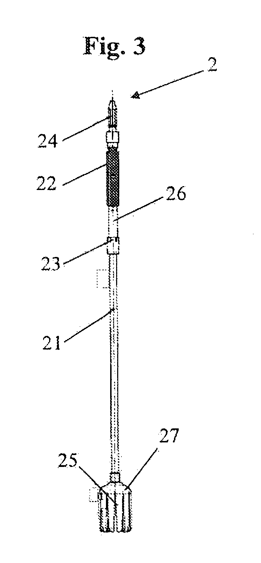

Fig. 3 zeigt eine zweite Ausführungsform der Erfindung. In Fig. 3 ist eine Vorderansicht einer Schleudervorrichtung für ein Wischgerät 2 dargestellt. Die erfindungsgemäße Spindelantriebsvorrichtung kann auch bei anderen Schleudervorrichtungen, wie beispielsweise Salatschleudern, eingesetzt werden.

Das Wischgerät 2 weist einen Stiel 21 auf, an dem die Spindelantriebsvorrichtung angeordnet ist. Die Spindelantriebsvorrichtung weist eine Dreherzeugungseinheit 22, die als Spindelmutter 22 ausgebildet ist und im Folgenden derart bezeichnet wird, und eine Spindel 26, die der in der ersten Ausführungsform beschriebenen Spindel entspricht, auf. Die Spindel 26 wird von dem Stiel 21 getragen. Des Weiteren weist das Wischgerät 2 ein Anschlagelement 23 auf, gegen das die Spindelmutter 22 anstoßen kann. An einem Ende des Stiels 21 ist ein Halter 24 zum Halten des Wischgeräts 2 angeordnet. An dem, dem Halter 24 gegenüberliegenden Ende des Stiels 21 sind Fransen 25 angeordnet, die über einen Wischkopf 27 mit dem Stiel 21 verbunden sind.

Bei dem Betrieb des Wischgeräts 2 wird dieses vom Benutzer an dem Halter 24 festgehalten, und die Spindelmutter 22 wird in Richtung zu den Fransen 25 bewegt. Da die Spindelmutter 22 mit dem Gewinde der Spindel 26 gekoppelt ist, erfährt die Spindel 26 und damit auch der Stiel 21 eine Drehbewegung. Aufgrund des ersten Abschnitts der Spindel 26, in dem die Gewindesteigung groß ist, ist der benötigte Kraftaufwand, um den Stiel mit den Fransen zu drehen, gering. Sobald die Spindelmutter 22 in Kontakt mit dem zweiten Bereich der Spindel 26 ist, erhöht sich aufgrund der kleineren Gewindesteigung der Spindel 26 die Drehzahl des Stiels 21 und der Fransen 25. Die Spindelmutter 22 wird durch den Benutzer soweit in Richtung der Fransen 25 bewegt, bis sie gegen das Anschlagelement 23 stößt.

### Bezugszeichenliste

- 1: Zerkleinerungsvorrichtung
- 10: Betätigungsvorrichtung
- 11: Dreherzeugungseinheit/ Spindelmutter
- 12: Spindel
- 12': erster Abschnitt
- 12": zweiter Abschnitt
- 13: Feder
- 14: Koppelelement
- 15: Gehäuse
- 16: Längsachse
- 17: Deckel
- 18: Zerkleinerungselemente
- 19: Behälter
- 2: Wischgerät
- 21: Stiel
- 22: Dreherzeugungseinheit/ Spindelmutter
- 23: Anschlagelement
- 24: Halter
- 25: Fransen
- 26: Spindel
- 27: Wischkopf

## Patentansprüche

1. Vorrichtung zum Zerkleinern von Lebensmitteln oder zum Schleudern von Salat mit
• einer Spindelantriebsvorrichtung zum Antreiben der Vorrichtung,
• einer, ein Gewinde aufweisenden Spindel (12) und
• einer mit der Spindel (12) koppelbaren Dreherzeugungseinheit (11)
**dadurch gekennzeichnet, dass**
die Spindel (12) mindestens zwei Abschnitte (12', 12") mit gleichsinnigem Gewinde (vgl. Figur 1) aufweist, wobei sich die Gewindesteigung der einzelnen Abschnitte (12', 12") derart voneinander unterscheidet, dass zur Erzeugung einer hohen Kraft zumindest ein Abschnitt mit größerer Gewindesteigung und zur Erzeugung einer hohen Drehzahl zumindest ein Abschnitt mit kleinerer Gewindesteigung vorgesehen ist (vgl. Seite 3, 2. Absatz).

2. Als Wischgerät (2) ausgebildete Vorrichtung mit einem Stiel (21), der an einem Ende einen Halter (24), an einem gegenüberliegenden Ende einen Fransen (25) aufweisenden Wischkopf (27) und eine Spindelantriebsvorrichtung mit einer Dreherzeugungseinheit in Form einer Spindelmutter (22) und einer Spindel (26) aufweist, wobei die Spindelantriebsvorrichtung derart ausgebildet ist, dass eine Bewegung der Spindelmutter (22) in Richtung des Wischkopfes (27) eine Drehbewegung des Stiels (21) bewirkt, **dadurch gekennzeichnet, dass** die Spindel (26) mindestens zwei Abschnitte (12', 12") aufweist, wobei sich die Gewindesteigung der einzelnen Abschnitte (12', 12")derart voneinander unterscheidet, dass zur Erzeugung einer hohen Kraft zumindest ein Abschnitt mit größerer Gewindesteigung und zur Erzeugung einer hohen Drehzahl zumindest ein Abschnitt mit kleinerer Gewindesteigung vorgesehen ist **(vgl. Seite 3, 2. Absatz)**.

3. Vorrichtung nach Anspruch 1 oder 2, **dadurch gekennzeichnet, dass** die Gewindesteigung des zu einer Betätigungseinrichtung (10) der Spindelantriebsvorrichtung näher liegenden ersten Abschnitts (12') größer ist als die Gewindesteigung des zu einem Koppelelement (14) der Spindelantriebsvorrichtung näher liegenden Abschnitts.

4. Vorrichtung nach Anspruch 1 oder 2, **dadurch gekennzeichnet, dass** die Gewindesteigung des zu einer Betätigungseinrichtung (10) der Spindelantriebsvorrichtung näher liegenden ersten Abschnitts (12') kleiner ist als die Gewindesteigung des zu einem Koppelelement (14) der Spindelantriebsvorrichtung näher liegenden Abschnitts.

5. Vorrichtung nach Anspruch 3 oder 4, **dadurch gekennzeichnet, dass** zwischen der Betätigungseinrichtung (10) und dem Koppelelement (14) eine Feder (13) vorgesehen ist.

6. Vorrichtung nach Anspruch 5, **dadurch gekennzeichnet, dass** die Dreherzeugungseinheit (11) an einem Ende mit der Feder (13) in Kontakt steht und an dem anderen Ende durch die Betätigungseinrichtung (10) betätigbar ist.

7. Vorrichtung nach einem der Ansprüche 3 bis 6, **dadurch gekennzeichnet, dass** die Betätigungseinrichtung (10) in einer betätigten Position mittels einer Arretiervorrichtung arretierbar ist.

8. Vorrichtung nach einem der vorhergehenden Ansprüche, **dadurch gekennzeichnet, dass** die Dreherzeugungseinheit (12) entlang einer Längsachse der Spindel (12) verschiebbar ist.

## Claims

1. A device for chopping food or for spinning lettuce comprising
• a spindle drive device for driving the device,
• a spindle (12), which encompasses a thread and
• a rotation-generating unit (11), which can be coupled to the spindle (12),
**characterized in that**
the spindle (12) encompasses at least two sections (12', 12") comprising an equidirectional thread (see Figure 1), wherein the thread pitch of the individual sections (12', 12") differs from one another such that, for generating a high force, provision is made for at least one section comprising a larger thread pitch and, for generating a high rotational speed, provision is made for at least one section comprising a smaller thread pitch (see page 3, 2^{nd} paragraph).

2. A device embodied as mopping device (2) comprising a handle (21), which encompasses a holder (24) at one end, a mop head (27), which encompasses fringes (25) at an opposite end, and a spindle drive device comprising a rotation-generating unit in the form of a spindle nut (22) and a spindle (26), wherein the spindle drive device is embodied such that a movement of the spindle nut (22) in the direction of the mop head (27) causes a rotary movement of the handle (21), **characterized in that**
the spindle (26) encompasses at least two sections (12', 12"), wherein the thread pitch of the individual sections (12', 12") differs from one another such that, for generating a high force, provision is made for at least one section comprising a larger thread pitch and, for generating a high rotational speed, provision is made for at least one section comprising a smaller thread pitch (see page 3, 2^{nd} paragraph).

3. The device according to claim 1 or 2, **characterized in that** the thread pitch of the first section (12'), which is located closer to an actuating device (10) of the spindle drive device, is larger than the thread pitch of the section, which is located closer to a coupling element (14) of the spindle drive device.

4. The device according to claim 1 or 2, **characterized in that** the thread pitch of the first section (12'), which is located closer to an actuating device (10) of the spindle drive device, is smaller than the thread pitch of the section, which is located closer to a coupling element (14) of the spindle drive device.

5. The device according to claim 3 or 4, **characterized in that** provision is made between the actuating device (10) and the coupling element (14) for a spring (13).

6. The device according to claim 5, **characterized in that** the rotation-generating unit (11) is in contact with the spring (13) at one end and can be actuated by means of the actuating device (10) at the other end.

7. The device according to one of claims 3 to 6, **characterized in that** the actuating device (10) can be locked in an actuated position by means of a locking device.

8. The device according to one of the preceding claims, **characterized in that** the rotation-generating unit (12) can be displaced along a longitudinal axis of the spindle (12).

## Revendications

1. Dispositif de fractionnement de produits alimentaires ou d'essorage de salade avec
• un dispositif d'entraînement par broche pour entraîner le dispositif,
• une broche (12) comportant un filetage et
• une unité de mise en rotation (11) susceptible d'être couplée à la broche (12)
**caractérisé en ce que**
la broche (12) comporte au moins deux tronçons (12', 12") avec des filetages de même sens (cf. figure 1), le pas de filetage de chacun des tronçons (12', 12") se distinguant mutuellement de telle sorte, que pour générer une force importante, il est prévu au moins un tronçon à pas de filetage plus important et pour générer une vitesse de rotation élevée, il est prévu au moins un tronçon à pas de filetage plus réduit (cf. page 3, 2^{ème} paragraphe).

2. Dispositif conçu comme un instrument d'essuyage (2), avec un manche (21), qui sur une extrémité comporte un support (24), sur une extrémité opposée comporte une tête d'essuyage (27) comportant des franges (25) et un dispositif d'entraînement de broche avec une unité de mise en rotation sous la forme d'un écrou de broche (22) et d'une broche (26), le dispositif d'entraînement de broche étant conçu de telle sorte qu'un déplacement de l'écrou de broche (22) en direction de la tête d'essuyage (27) provoque un déplacement en rotation du manche (21), **caractérisé en ce que** la broche (26) comporte au moins deux tronçons (12', 12''), le pas de filetage de chacun des deux tronçons (12', 12") se distinguant mutuellement de telle sorte, que pour générer une force importante, il est prévu au moins un tronçon à pas de filetage plus important et pour générer une vitesse de rotation élevée, il est prévu au moins un tronçon à pas de filetage plus réduit (cf. page 3, 2^{ème} paragraphe).

3. Dispositif selon la revendication 1 ou la revendication 2, **caractérisé en ce que** le pas de filetage du premier tronçon (12') plus proche d'un système de manoeuvre (10) du dispositif d'entraînement de broche est supérieur au pas de filetage d'un tronçon plus proche d'un élément de couplage (14) du dispositif d'entraînement de broche.

4. Dispositif selon la revendication 1 ou la revendication 2, **caractérisé en ce que** le pas de filetage du premier tronçon (12') plus proche d'un système de manoeuvre (10) du dispositif d'entraînement de broche est inférieur au pas de filetage d'un tronçon plus proche d'un élément de couplage (14) du dispositif d'entraînement de broche.

5. Dispositif selon la revendication 3 ou la revendication 4, **caractérisé en ce qu'**entre le système de manoeuvre (10) et le système de couplage (14), il est prévu un ressort (13).

6. Dispositif selon la revendication 5, **caractérisé en ce que**, sur une extrémité, l'unité de mise en rotation (11) est en contact avec le ressort (13) et sur l'autre extrémité, elle est susceptible d'être manoeuvrée par le système de manoeuvre (10).

7. Dispositif selon l'une quelconque des revendications 3 à 6, **caractérisé en ce que** le système de manoeuvre (10) est susceptible d'être bloqué dans une position de manoeuvre au moyen d'un dispositif de blocage.

8. Dispositif selon l'une quelconque des revendications précédentes, **caractérisé en ce que** l'unité de mise en rotation (12) est déplaçable le long d'un axe longitudinal de la broche (12).
